# EUROPEAN PATENT APPLICATION

(11) **EP 1 091 350 A1**
(43) Date of publication of application: **11.04.2001**
(21) Application number: 00121874.2
(22) Date of filing: 06.10.2000
(51) Int. Cl.: G11B 5/84

(54) **Magnetic tape processing apparatus**

(30) Priority: 06.10.1999 JP 28541599
(71) Applicant: FUJI PHOTO FILM CO., LTD., Kanagawa (JP)
(72) Inventor: Suzuki, Hisashi, Fuji Photo Film Co., Ltd., Odawara-shi, Kanagawa (JP); Araki, Minoru, Fuji Photo Film Co., Ltd., Odawara-shi, Kanagawa (JP)
(74) Representative: Grünecker, Kinkeldey, Stockmair & Schwanhäusser Anwaltssozietät

(57) **Abstract**

The magnetic tape processing apparatus is provided with an optical system for allowing at least one laser beam to be incident on a predetermined processing position, a transport device for transporting a magnetic tape in a lengthwise direction and a guide roller in a hollow cylindrical form which can freely rotates in accordance with a transport speed of the magnetic tape or a freely rotatable hollow cylindrical processing drum which is rotated by a rotating device. On a lateral surface of each of the guide roller and the processing drum, light transmitting portions and a light shading portion for forming a laser beam of a predetermined pattern in the processing position are formed. The apparatus may be provided with a differential pressure generating device which generates pressure difference between inside and outside the processing drum. Thus, the laser beam which has been incident inside the guide roller or the processing drum from the optical system is allowed to pass through the light transmitting portions toward outside of the guide roller or the processing drum, and the magnetic tape is subjected to processing in the processing position by the laser beam which has thus passed through the light transmitting portion and formed the first predetermined pattern. The apparatus can supply consistently and also manufacture with good production efficiency the magnetic tape having excellent characteristics such that a slip of the tape does not occur and a size and degree of cupping of the tape is small.

## Description

### BACKGROUND OF THE INVENTION

The present invention belongs to the technical field of a magnetic tape used for record/reproduction of information. More particularly, the present invention relates to a magnetic tape processing apparatus capable of manufacturing a magnetic tape in such a manner that even if the magnetic tape is transported at a high speed in a manufacturing process and the like thereof, no slip is caused to the magnetic tape and further cupping is also reduced.

Magnetic tapes used to record or reproduce information, such as magnetic tapes for use in DAT (digital audio tape), DDS (digital data storage) and the like, are basically composed of a base layer which is a film such as PET (polyethylene terephthalate) and the like, a magnetic layer formed on one of surfaces of the base layer, a backing layer formed on the surface of the base layer opposite to the magnetic layer for the purpose of improving stability of the magnetic tape when it is transported, strength thereof and the like.

In the manufacturing process of the magnetic tapes, a magnetic tape (hereinafter, referred to as "tape") is subjected to various types of processing such as the cutting of the tape with a slitter, the cleaning of the surface thereof with a blade edge while it is transported in the lengthwise direction thereof, made to a pancake or a cassette by being wound around a hub and delivered to the next process or to a customer; however, there is recently a tendency that tapes are transported at a high speed in various types of processes (manufacturing apparatus such as a blade machine, a winder and the like) for the enhancement of productivity.

The transportation of the tape is carried out by wrapping it on a capstan roller and rotating the capstan roller.

However, when the transportation speed of the tape is increased, the tape entrains air in the manufacturing apparatus such as the blade machine, winder and the like and floats above the capstan roller and the like, whereby the tape slips and may not be normally transported.

As a result, the tape collides or comes into improper contact with the capstan roller, a guide roller, the blade edge and the like, whereby the damage of the tape is caused such as the fold of the tape itself or the edge thereof, the wear and peeling of the magnetic layer, and the like. Thus, the resulting tape is made improper as a product. Further, a roller for measuring a tape length (measurement roller) is mounted on the tape manufacturing apparatus when necessary; however, when the tape slips thereon, an error arises in the measurement of the tape length and thus a problem also arises in that the production of the tape cannot properly be managed.

Accordingly, it is difficult to increase the tape transportation speed favorably corresponding to the required improvement of a manufacturing efficiency in the manufacture of tape.

Further, a curl in a width direction of the tape, namely, cupping, is known as another problem which the tape has. Cupping is mainly caused by the difference of shrinking ratios between respective binders used in the magnetic layer and the backing layer.

Various problems are caused by the occurrence of the cupping such as the deterioration of the appearance of the magnetic tape as a product; the fear of the occurrence of recording error and reading error due to the deteriorated touch of the magnetic tape against a recording head and a reading head; the lowered durability of the magnetic tape because the edges thereof are liable to be damaged, and the like.

### SUMMARY OF THE INVENTION

An object of the present invention is to solve the problems of the conventional technology and to provide a magnetic tape processing apparatus which can not only manufacture with good production efficiency a magnetic tape having excellent characteristics such that occurrence of a slip of the magnetic tape is not caused on a capstan roller and the like, even if a transportation speed of the tape is increased in the magnetic tape manufacturing apparatus such as a blade machine, winder and the like and, furthermore, a size of cupping of the magnetic tape is small but also supply the resultant magnetic tape consistently.

In order to attain the object described above, the first aspect of the present invention provides a magnetic tape processing apparatus, comprising an optical system for allowing at least one laser beam to be incident on a predetermined processing position, a transport device for transporting a magnetic tape in a lengthwise direction as it is held in a state in which a backing layer thereof faces to an upstream side of an optical path of the laser beam in the predetermined processing position, and a guide roller in a hollow cylindrical form on a lateral surface of which light transmitting portions and a light shading portion for forming laser beams of a first predetermined pattern in the predetermined processing position are formed and which has a rotating axial line in a direction orthogonal to a transport direction of the magnetic tape and can freely rotates in accordance with a transport speed of the magnetic tape, wherein the laser beam which has been incident inside the guide roller from the optical system is allowed to pass through the light transmitting portions toward outside of the guide roller in a radial direction thereof, and wherein the magnetic tape is subjected to processing in the predetermined processing position by the laser beams which has thus passed through the light transmitting portions and formed the first predetermined pattern.

Preferably, the guide roller comprises a cylindrical tubular member which is light transmissible and freely rotatable in accordance with the transport speed of the magnetic tape, and a pattern forming device which disposes the light transmitting portions for allowing a part of the laser beam to pass therethrough and the light shading portion for shading the other part of the laser beam than the part of the laser beam which passes through the light transmissible portions in a second predetermined pattern, wherein the laser beam which has been incident inside the cylindrical tubular member of the guide roller from the optical system is allowed to pass through the pattern forming device toward the outside of the guide roller, and wherein the magnetic tape is subjected to processing in the predetermined processing position by the laser beams which has formed the first predetermined pattern by thus passing through the pattern forming device.

Preferably, the cylindrical tubular member is made of light transmissible material.

Preferably, the pattern forming device is provided on an inner or outer circumferential surface of the guide roller.

Preferably, the pattern forming device comprises at least one member selected from the group consisting of a metallic cylinder having apertures formed in accordance with a processing pattern to which the magnetic tape is subjected, a metallic thin film having apertures formed in accordance with the processing pattern to which the magnetic tape is subjected, a light-shading film produced by first forming the second predetermined pattern in accordance with the processing pattern to which the magnetic tape is subjected and then by utilizing a technique of film transfer and a surface subjected to surface roughening processing formed on the inner circumferential surface of the guide roller for allowing the laser beam to be scattered in a non-processed portion of the processing pattern of the magnetic tape.

When the pattern forming device is provided on the outer circumferential surface of the guide roller, the outer circumferential surface of the guide roller is preferably coated with a light-transmissible material.

Preferably, the guide roller is wrapped by the magnetic tape, and wherein the outer circumferential surface of the guide roller is in contact with the backing layer of the magnetic tape.

Preferably, the guide roller is not in contact with the backing layer of the magnetic tape, and wherein the outer circumferential surface of the guide roller is adjacent to the magnetic tape and faces to the backing layer of the magnetic tape.

It is preferable that the magnetic tape processing apparatus further comprises a cleaning device for removing a blemish on the outer circumferential surface of the guide roller.

Preferably, the optical system comprises a light source for emitting the at least one laser light, a sheet-like laser beam forming device for changing the laser beam emitted from the light source into a sheet-like laser beam extending only in a one dimensional direction and a mirror for reflecting the sheet-like laser beam which has been incident inside the guide roller toward outside of the guide roller.

Preferably, the optical system comprises the light source for emitting at least one of a laser beam in an ultraviolet region and a laser beam in a visible region as the at least one laser beam.

The second aspect of the present invention provides a magnetic tape processing apparatus, comprising a freely rotatable hollow cylindrical drum on a lateral surface of which light transmitting portions and a light-shading portion for forming a predetermined pattern are formed, a rotating device for rotating the drum about an axis line, an optical system for forming a beam line by a laser beam by allowing the laser beam in a planar form to be incident on an inner surface of the drum, and a transport device for transporting a magnetic tape with a backing layer thereof facing to the drum in a lengthwise direction in parallel with a direction of rotation of the drum, as the magnetic tape is in registry with a processing position to be set in a position which is on an optical path of the laser beam that has been incident on the inner surface of the drum and then passed through the light transmitting portions and in which the magnetic tape is not in contact with the drum.

It is preferable that the magnetic tape processing apparatus further comprises a lens optical system between the processing position and the drum.

The third aspect of the present invention provides a magnetic tape processing apparatus, comprising a freely rotatable hollow cylindrical drum which has a multiplicity of through holes on a lateral surface thereof, a rotating device for rotating the drum about an axis line, an optical system for forming a beam line by a laser beam by allowing the laser beam in a planar form to be incident on an inner surface of the drum, and a transport device for transporting a magnetic tape with a backing layer thereof facing to the drum in a lengthwise direction in parallel with a direction of rotation of the drum, as the magnetic tape is in registry with a processing position to be set on an optical path of the laser beam that has been incident on the inner surface and then passed through the through holes, and a differential pressure generating device for generating pressure difference between inside and outside the drum.

### BRIEF DESCRIPTION OF THE DRAWINGS

FIGs. 1A and 1B are conceptual views each illustrating an example of a backing layer of a magnetic tape processed by a magnetic tape processing apparatus according to the present invention;
FIG. 2 is a diagrammatic conceptual view of an embodiment of a magnetic tape processing apparatus according to the present invention;
FIG. 3A is a partial cross-sectional view taken on line II-II' of the embodiment of the magnetic processing apparatus shown in FIG. 2; FIG. 3B is a development showing an example of a mask pattern formed on a pattern forming device of a magnetic tape processing apparatus according to the present invention;
FIG. 4 is a diagrammatic conceptual view of another embodiment of a magnetic tape processing apparatus according to the present invention;
FIGs. 5A and 5B are illustrations explaining other embodiments of a guide roller of a magnetic tape processing apparatus according to the present invention;
FIG. 6A is a diagrammatic conceptual view, seen from a width direction of the tape, of another embodiment of a magnetic tape processing apparatus according to the present invention; FIG. 6B is a diagrammatic conceptual view, seen from a lengthwise direction of the tape, of the above-described apparatus; FIG. 6C is a schematic cross-sectional view of a processing drum of the above-described apparatus;
FIG. 7 is a diagrammatic conceptual view of another embodiment of a magnetic tape processing apparatus according to the present invention;
FIG. 8A is a diagrammatic conceptual view, seen from a width direction of the tape, of still another embodiment of a magnetic tape processing apparatus according to the present invention; FIG. 8B is a diagrammatic conceptual view, seen from a lengthwise direction of the tape T, of the above-described apparatus;
FIG. 9 is a cross-sectional view taken on line a-a of FIG. 8A; and
FIG. 10 is a diagrammatic conceptual view of an optical system of another embodiment of a magnetic tape processing apparatus according to the present invention.

### DETAILED DESCRIPTION OF THE INVENTION

A magnetic tape processing apparatus according to the present invention will be described below in detail with reference to preferred embodiments shown in the accompanying drawings.

A magnetic tape, which is processed by the magnetic tape processing apparatus (hereinafter referred to simply as "processing apparatus") according to the present invention, is a magnetic tape having such an ordinary layer arrangement that a base layer (base film) composed of PET, aramid resin or the like has a magnetic layer on one surface thereof and a backing layer (back coat layer) on the other surface thereof or the base layer further has an overcoat layer (protective layer) or a lower coat layer deposited thereon; the backing layer of the magnetic tape arranged as described above is processed by the processing apparatus according to the present invention to form a recess thereon.

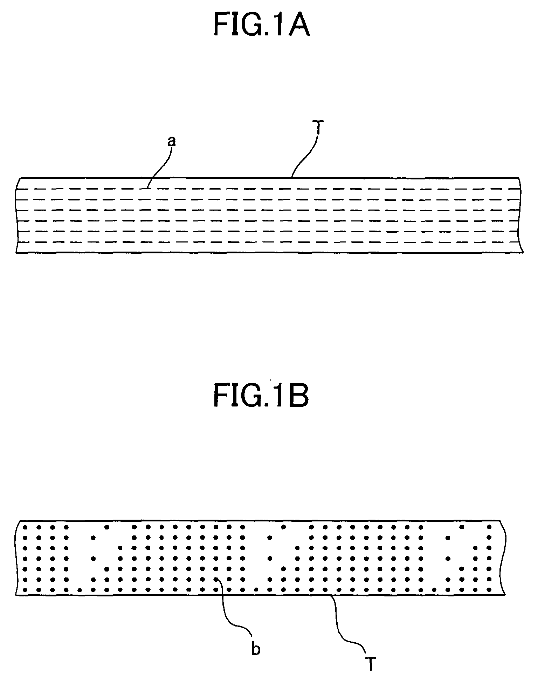

FIGs. 1A and 1B each conceptually show an example of a backing layer of a magnetic tape (hereinafter referred to simply as "tape") T processed by a magnetic tape processing apparatus according to the present invention so as to have recesses formed on the backing layer thereof.

In the example shown in FIG. 1A, processing of the backing layer is intermittently performed in the lengthwise direction of the tape T by the processing apparatus according to the present invention whereupon a plurality of rows of processed patterns each in a dotted line (broken line) extending in the lengthwise direction which is composed of short grooves (processed line segments a) extending in the lengthwise direction of the tape T as recesses are formed in the width direction of the tape T (hereinafter referred to as "width direction") on the backing layer of the tape T.

Moreover, the processing apparatus according to the present invention can form not only the processed line segments a as recesses as shown in FIG. 1A, but also desired patterns composed of processed dots b which are formed by periodically processing the backing layer at regular intervals in a lengthwise direction of the tape T as shown in an example in FIG. 1B.

The shape (cross-sectional shape) of the recess is not particularly limited, and, for example, a rectangular shape, a triangular shape, a semi-circular (bow) shape and the like are exemplified.

These shapes can be adjusted by the distribution of intensity of the beam spot of a laser beam for processing the backing layer.

Further, the depth of the recess is not particularly limited and may appropriately be determined in accordance with the intensity or the like of the tape T; however, in order to obtain a favorable effect, the depth of the recess is preferably 0.1µm or more and, more preferably, 0.2µm or more.

Still further, the size of the recess (line width) and the forming density in which recesses are formed are not particularly limited and may appropriately be determined in accordance with the intensity, width (size) or the like of the tape T; for example, when processed line segments a or processed dots b which extend in the lengthwise direction as shown in FIGs. 1A or 1B are formed on the tape having a width of 0.5in (12.7mm), it is preferable to form several to about one hundred pieces of processed line segments a or processed dots b each having a width of about 3µm to about 10µm in the width direction of the tape.

The tape which has such recesses on the backing layer thereof reduces air to be entrained even if each of the tapes is transported (traveled) at a high speed. Further, even if air is entrained, such air can favorably be removed from the recesses such as the processed line segments a, processed dots b and the like as shown in FIG. 1A and FIG. 1B. Thus, even if the tape is transported at the high speed in the tape manufacturing apparatus such as the blade machine or the like, the tape does not slip by being floated above the capstan roller or the like and the damage and dimensional error of the tape are not caused by the slip. Therefore, the use of such tape makes it possible to manufacture the magnetic tape having proper quality in a stable, highly efficient manner under a proper production management by accurately transporting the tape at the high speed.

Further, when the tape is wound or taken-up, since air between the adjacent turns of tape can advantageously be removed, the tape can be wound and made to the cartridge or the pancake having a beautiful wound appearance.

Moreover, in the tape T having the recesses on the backing layer thereof as shown in FIG. 1A or FIG. 1B, since the cupping is reduced as compared with conventional tapes, the deterioration of the outside appearance of the tape, the deterioration of the touch of the tape against a head, the damage of the edges of the tape and the like, which are all caused by the cupping, can be greatly reduced as compared with those in the conventional tapes.

A reason why the cupping can be reduced by the formation of the recesses on the backing layer is not apparent; however, it is contemplated that, since the stress produced in the width direction of a tape by the difference between the rates of shrinkage of the above-described binders is discontinued by the recesses, stress generated in the width direction of the tape is reduced as a whole whereupon the cupping can be prevented.

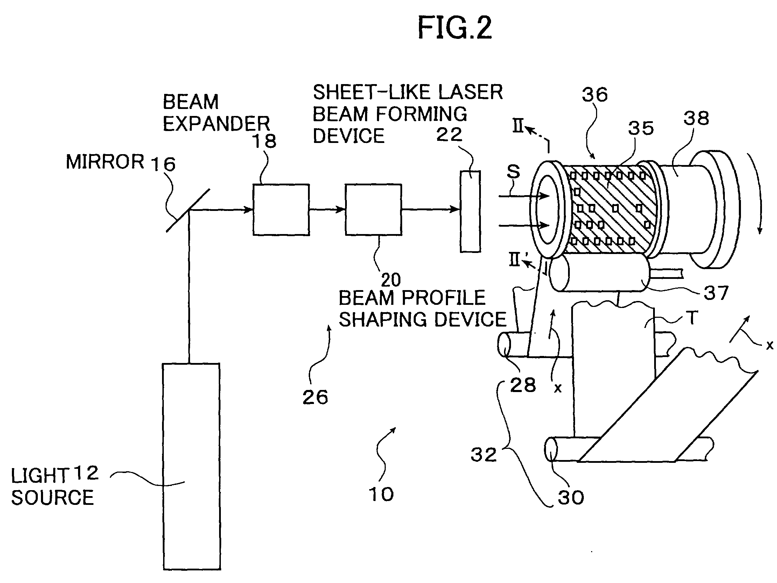

First, the magnetic tape processing apparatus of a first aspect of the present invention will be described with reference to FIGs. 2 to 5B.

FIG. 2 shows a diagrammatic conceptual view of a processing apparatus 10 as a preferred embodiment of a magnetic tape processing apparatus of a first aspect of the present invention for use in processing such a magnetic tape.

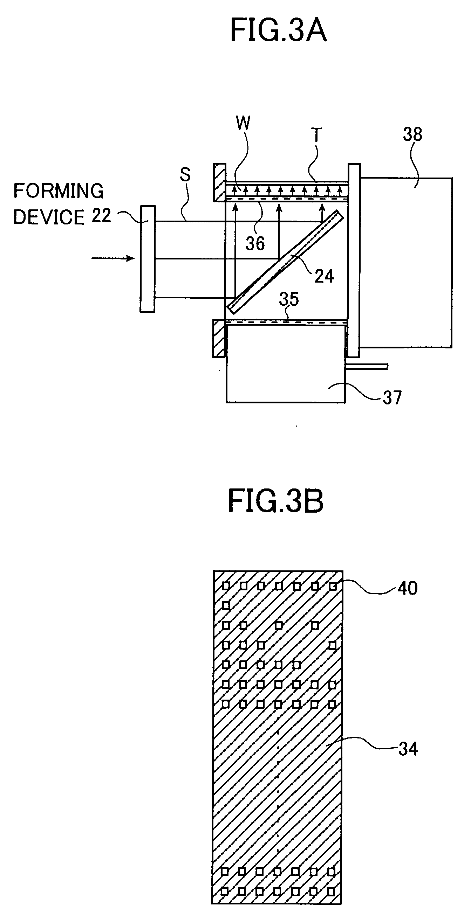

The processing apparatus 10 shown in FIG. 2 is essentially composed of a light source 12, an optical system 26 having a mirror 16, a beam expander 18, a beam profile shaping device 20, a sheet-like laser beam forming device 22 and a mirror 24 (see FIG. 3A) disposed inside an inner circumferential surface of a guide roller 36 in a cylindrical tube form to be described below, a transport device 32 having capstan rollers 28 and 30, the guide roller 36 which has a metallic thin film 35 forming a mask pattern 34, allows the tape T to be wrapped thereon and freely rotates around a central shaft, and a cleaning device 37 for removing a blemish or a tarnish from an outer circumferential surface of the guide roller 36.

The processing apparatus 10 shown in FIG. 2 performs processing on the tape T shown in FIG. 1B; however, processing of the tape T shown in FIG. 1A is performed by the similar arrangement except for a mask pattern 34 to be described below. Further, a part in which the tape T contacts the guide roller 36 in FIG. 2 is omitted to show the mask pattern 34 provided to the guide roller 36 more clearly.

In the processing apparatus 10 arranged as described above, as shown in FIG. 3A, the laser beam is incident inside the inner circumferential surface of the guide roller 36 through the optical system 26 and the resultant incident laser beam is incident on the processing position W on the inner circumferential surface of the cylindrical tube by the mirror 24 while the tape T is transported (traveled) in a lengthwise direction thereof (x-direction in FIG. 2) by the capstan rollers 28 and 30 as it is held in registry with the predetermined processing position W. On this occasion, the tape T is transported such that the backing layer thereof contacts the outer circumferential surface of the guide roller 36 and faces to an incident side of the laser beam; thus, the backing layer of the tape T is processed by a pattern-formed laser beam generated by passing through the guide roller 36 whereupon the processed line segments a or the processed dots b which extend in a lengthwise direction of the tape T as shown in FIG. 1A or FIG. 1B are formed. In FIG. 3A, for the purpose of showing the tape T and the guide roller 36 more clearly, the tape T is shown in a floating state above the outer circumferential surface of the guide roller 36.

The light source 12 emits the laser beam which processes the backing layer of the tape T.

The light source 12 is not particularly limited and various types of laser beam sources (laser oscillators) can be used so long as they can emit a laser beam having an output capable of processing the backing layer; preferably, the type capable of emitting at least one of a laser beam in an ultraviolet region and a laser beam in a visible region. Note that a laser beam having a short wave length is preferable with respect to processability and thus the laser beam of the ultraviolet region is most preferable, whereas the laser beam of the visible region is preferable with respect to cost, safety, workability and the like.

Specifically exemplified as the light source are argon (ion) lasers of 488 nm or 515 nm, a light source or the like for emitting a laser beam of 532 nm which is obtained by subjecting a YAG laser to wavelength conversion with a SHG (second harmonic generation) element and the like.

The laser beam is reflected by the mirror 16 in a predetermined direction and then incident on the beam expander 18.

The processing apparatus 10 forms processed lines or processed dots (both being hereinafter referred to as "processed dots or the like" collectively) on the backing layer of the tape T by a single laser beam, and it is preferable that the processed dots or the like can be formed at a time on the entire surface of the tape T in the width direction thereof from the standpoint of efficiency. In general, however, the diameter of a laser beam emitted from the light source 12 is about 1 mm and the tape T is wider than the diameter; thus, the entire surface of the tape T in the width direction thereof cannot be processed with the laser beam as it is.

To cope with this problem, the beam expander 18 is disposed in the processing apparatus 10 to expand the diameter of the laser beam emitted from the light source 12. When, for example, the diameter of the laser beam emitted from the light source 12 is 1 mm and the width of the tape T is 0.5 inch (12.7mm), it is sufficient to expand the diameter of the laser beam to about 15 times to 20 times.

The laser beam the diameter of which has been expanded by the beam expander 18 is then incident on the beam profile shaping device (hereinafter referred to as "shaping device") 20. The shaping device 20 makes the intensity of the laser beam substantially uniform on the entire area of the cross-section (profile) of a beam spot. That is, the shaping device 20 makes the distribution of intensity of the laser beam substantially uniform.

Ordinarily, since the laser beam emitted from the light source 12 has a distribution of intensity such as Gaussian distribution, when the tape T is processed by dividing the laser beam, the depths of the processed dots or the like are made different from each other in accordance with positions thereof in the width direction of the tape T depending upon the distribution of intensity. To cope with the problem, in the illustrated embodiment, the provision of the shaping device 20 makes the distribution of intensity of the laser beam uniform so that the depths of the processed dots or the like can be made substantially uniform.

Note that various types of optical filters, an aperture having the same diameter as that of the laser beam for shaping a beam profile making use of Fresnel diffraction, a multiple-lens or the like can be used as the shaping device 20.

The laser beam with uniform intensity distribution generated by the above-described shaping device 20 is subsequently incident on a sheet-like laser beam forming device (hereinafter referred to as "forming device") 22.

The forming device 22 is a device in which the laser beam with uniform intensity distribution is converted into a laser beam in a planar (sheet) form (hereinafter referred to as "sheet beam S") which linearly extends only in one direction. Preferably, the forming device 22 generates the sheet beam S which linearly extends only in a radial direction of the guide roller 36. Further, in the illustrated embodiment, as a preferred embodiment, the sheet beam S and the tape T are disposed such that they are perpendicular to each other as planes.

The above-described forming device 22 is not particularly limited but various types of known optical systems (optical elements) which can convert the laser beam into the sheet beam S can be utilized. Examples thereof include a slit plate having a larger width than that of the tape T, a cylindrical lens, the optical system using the cylindrical lens and the like. Specifically, an optical system which is a combination of the cylindrical lens and a collimator lens, another optical system which is a combination of a rod lens and the cylindrical lens (collimator lens) and the like are exemplified. As another case, a combination of the cylindrical mirror and other various optical elements may be used, if possible.

Further, even if the beam diameter of the laser beam emitted from the light source 12 is small, or even if the intensity distribution is not perfectly uniform, once the forming device 22 itself can expand the width of the sheet beam only in one direction to form the sheet beam which linearly extends in an approximately uniform intensity distribution and is fine enough, one or both of the beam expander 18 and the shaping device 20 may be omitted.

The sheet beam S which was formed by the forming device 22 is then incident inside a hollow portion of the guide roller 36.

The guide roller 36 is composed of a light-transmissible glass material and is supported by a guide support member 38. Namely, the guide roller 36 is supported by the guide support member 38 such that it can freely be rotated about an axial line (center line); thus, it is rotated by the travel of the tape T to be described below (or rotation of a drive source provided separately) without causing a slip on the tape T.

The guide roller 36 according to an embodiment of the present invention is composed of the glass material; however, it is not limited to the above-described type in the processing apparatus of the magnetic tape according to the present invention; it may be a resin material which is light-transmissible and heat resistant up to several hundred degrees centigrade.

FIG. 3A shows a diagrammatic partial cross-sectional view taken on line II-II' shown in FIG. 2; the mirror 24 is fixed at an angle of 45 degrees with the reflecting surface thereof being directed upward inside the inner circumferential surface of the cylindrical tubular member. The above-described mirror 24 is fixed by a known method such that it is not rotated together with the guide roller 36.

The guide roller 36 has the metallic thin film 35 which forms the mask pattern 34 on the outer circumferential surface of the cylindrical tubular member and is coated with glass from outside.

The metallic thin film 35, as shown in a development in FIG. 3B, is processed to have a predetermined pattern having a plurality of apertures 40, is applied on the outer circumferential surface of the guide roller 36 and then coating is executed thereon by a known glass coating method such as vacuum evaporation, plasma activated reactive evaporation, sputtering or the like while the guide roller 36 is rotated. Then, the resultant coated surface thereof is polished by a diamond wheel or the like

As described above, the metallic thin film 35 on which the mask pattern 34 is formed is applied and then subjected to glass coating whereby, as described below, clogging of the apertures 40 of the metallic thin film 35 which is caused by allowing process wastes such as powder dust and the like to enter the apertures 40 when the tape T contacts the outer circumferential surface thereof in the processing position W is prevented. If the guide roller is composed of a metallic material which is not light transmissible and on the outer circumferential surface of which a plurality of apertures are provided to form the mask pattern, clogging the apertures by the process wastes such as powder dust and the like of the tape T occurs to close the apertures whereby it becomes difficult to form a predetermined processing pattern in a consistent manner at the time of processing the tape T. However, as the above-described embodiment, the outer circumferential surface of the guide roller 36 is coated with glass to prevent the metallic thin film 35 which is a pattern forming device from contacting the tape T whereupon clogging does not occur and the processing pattern can be formed in a consistent manner. Further, by polishing the coated surface, scatter of the laser beam derived from a irregularity of the coated surface is prevented whereupon deterioration of the light intensity is prevented and also extra damage of the backing layer of the tape T to be caused by the irregularity of the coated surface is prevented.

The metallic thin film 35 is arranged such that the laser beam which is reflected by the mirror 24 and passes through a thick portion of the cylindrical tube of the guide roller 36 is screened by a plurality of apertures 40 perforated in a predetermined pattern, namely, a part of the laser beam which is positioned in the apertures 40 is allowed to pass therethrough and the other part thereof is blocked so as to form the laser beam of a predetermined pattern.

The cleaning device 37 is a device to remove a blemish (a foreign matter such as a dust, dirt or the like) from the outer circumferential surface of the guide roller 36 and is provided on the opposite side of the processing position W. The cleaning device 37 is a cylinder which is freely rotatable about a rotating axis that is in parallel with the rotating axis of the guide roller 36 and the surface of which is wrapped around with non-woven fabric or the like, and contacts the outer circumferential surface of the guide roller 36. By the above-described arrangement, when the tape is processed, process wastes such as powder dust and the like adhering to the coated outer circumferential surface of the guide roller 36 are removed, namely, the blemish on the outer circumferential surface of the guide roller 36 is removed whereupon a stable processing of the tape T is made possible.

The processing apparatus 10 having the above-described construction emits the laser beam from the light source 12, reflects it by the mirror 16 and expands the diameter thereof in accordance with the width of the tape T, say, from about 15 times to 20 times by the beam expander 18. Then, the intensity of the laser beam is made to be approximately uniform across the entire beam spot, namely, the intensity of the laser beam is made approximately uniform.

Thereafter, the sheet-like laser beam forming device 22 converts the laser beam having a uniform intensity distribution into the sheet-like laser beam S which extends in one direction, reflects the resultant sheet-like laser beam S by the mirror 24 which is fixed on the inner circumferential surface of the guide roller 36 and allows the resultant reflected laser beam S to be irradiated in a direction from the inner circumferential surface to the outer circumferential surface of the guide roller 36.

The metallic thin film 35 which forms the mask pattern 34 thereon is provided on the outer circumferential surface of the guide roller 36 after being coated with glass so that it does not contact the tape T in the processing position W; the sheet-like laser beam S passes through a plurality of apertures 40 of the metallic thin film 35 to become the laser beam having the predetermined pattern.

The tape T is wrapped around the outer circumferential surface of the guide roller 36 along the guide roller 36 and is processed in the processing position W by the laser beam which has passed through the apertures 40.

The guide roller 36 is rotated by the capstan rollers 28 and 30 without causing a slip on the tape T which is transported at a given speed so that the guide roller 36 is also rotated as the tape T is transported whereupon a pattern composed of processed dots or the like of recesses similar to those of the mask pattern 34 is formed on the backing layer of the tape T. In such ways, the pattern as shown in FIG. 1B can be formed.

When the pattern as shown in FIG. 1A is desired, a metallic thin layer processed in a line segment form having a given length may be used instead of the apertures 40 of the mask pattern 34. In such a way, the pattern to be processed can be changed by changing the mask pattern 34.

Further, in the above-described embodiment, the metallic thin film 35 is provided on the outer circumferential surface of the guide roller 36; however, it is not necessarily provided thereon and may be provided on the inner circumferential surface thereof. On this occasion, since clogging of the mask pattern does not occur by process wastes such as powder dust and the like, it is not necessary to apply glass coating on the inner circumferential surface; however, needless to say, the glass coating may be applied thereon.

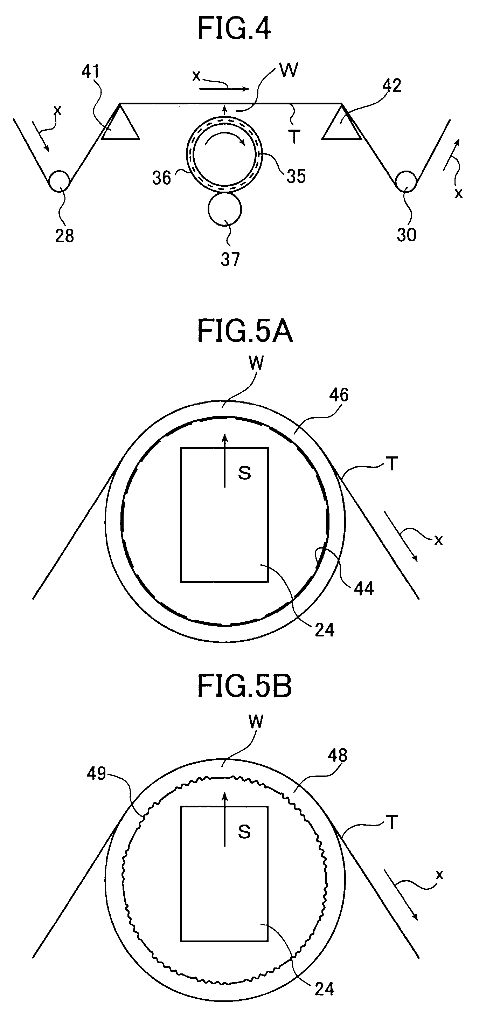

Further, the processing apparatus 10 of the above-described embodiment is constructed such that the tape T contacts the outer circumferential surface of the guide roller 36; however, as shown in FIG. 4, the processing position W is fixed in a predetermined height by support blades 41 and 42 such as sapphire blade or the like which are each a process support device so that the guide roller 36 is spaced from the tape T so as not to contact it and may be rotated by a drive device such as a drive motor or the like.

On this occasion, since the metallic thin film 35 does not directly contact the tape T in the processing position W, it can be provided on the outer circumferential surface of the guide roller 36 without applying the glass coating thereon. Needless to say, the glass coating 35 may be applied thereon.

Further, the rotating speed of the guide roller 36 does not necessarily correspond to the transport speed of the tape T; a pattern in which the mask pattern 34 is compressed in a lengthwise direction may be formed on the backing layer of the tape T by increasing the rotating speed thereof. In contrast, a pattern in which the mask pattern 34 is expanded in a lengthwise direction may be formed by reducing the rotating speed of the guide roller 36. On this occasion, the guide roller 36 does not contact the tape T in the processing position W so that process wastes such as powder dust and the like which adhere to the outer circumferential surface of the guide roller 36 are reduced and, therefore, blemishing the surface is reduced.

As another embodiment, the processing apparatus in which a metallic cylinder 44 provided with a plurality of apertures 40 as shown in FIG. 5A and having a mask pattern 34 as shown in FIG. 3B may be attached in a fixed manner to an inner circumferential surface of a guide roller 46 while the light source 12, the optical system 26 and the transport device 32 remain unchanged, instead of providing the metallic thin film 35 having a mask pattern 34 thereon as shown in FIG. 3B onto the outer circumferential surface of the guide roller 36, may be permissible. The guide roller 46 may be of glass material or of resin material as far as it is light transmissible and heat resistant up to several hundred degrees centigrade in the same way as in the guide roller 36.

On this occasion, since the mask pattern is formed on the inner circumferential surface of the guide roller 46, provision of glass coating or the like is not necessary contrary to the case in which it is formed on the outer circumferential surface whereupon the guide roller can easily be produced.

Further, a light-shading film may be provided by transferring a film on which a predetermined mask pattern has been formed to the outer or inner circumferential surface of the guide roller 36 or 46, in place of the metallic thin film on which the mask pattern 34 has been formed as shown in FIG. 3B. The above-described light-shading film can be obtained by forming a mask pattern on film having a layer of light-sensitive pattern-forming material which includes a light-shading material by UV laser or the like and then performing film transfer on the outer or inner circumferential surface of the guide roller 36 or 46. Such a film transfer method may be any known method and is not particularly limited.

When the film transfer is performed on the outer circumferential surface of the guide roller 36 or 46, it is preferable to perform coating processing such as glass coating or the like thereon; by means of glass coating or the like, irregularity of the mask pattern can be eliminated and clogging to be caused by process wastes such as powder dust and the like generated at the time of processing can also be prevented.

Further, in place of the metallic cylinder 44 to be provided on the guide roller 46, it is permissible that, as shown in FIG. 5B, surface roughening processing is performed on an inner circumferential surface of a guide roller 48 in accordance with the pattern with which the tape T is processed to form a surface 49 subjected to surface roughening processing. Namely, the surface roughening processing is performed on the other portion of the inner surface than the portion which is processes the tape T by permitting the sheet-like laser beam S to pass therethrough such that the sheet-like laser beam S is reflected diffusely on the inner circumferential surface of the guide roller 48 to scatter the light. The surface roughening method is performed, for example, by a known sand blasting method.

The guide roller 48 may be either of glass material or resin material as far as it is light transmissible and heat resistant up to several hundred degrees centigrade in the same way as in the guide roller 36 or the guide roller 46.

According to such arrangements, the metallic thin film 35, the metallic cylinder 44, the light-shading film and the like are not required and, therefore, construction and production of the guide roller become extremely easy.

Further, as in the embodiment shown in FIG. 4, when the guide roller is constructed such that it is spaced from the tape T so as not to contact with the tape T, the metallic thin film 35, the metallic cylinder 44, the light-shading film produced by film transfer or the surface 49 subjected to surface roughening processing may be provided on the outer circumferential surface of the guide roller without applying glass coating thereon; however, needless to say, glass coating may be applied on the outer circumferential surface thereof.

As has been described above in detail, according to the first embodiment of the present invention, the guide roller which processes the magnetic tape is composed of the light-transmissible material and the pattern forming device which forms the pattern of the laser beam incident on the guide roller is provided on the guide roller whereupon, even if the transport speed of the tape is increased to a higher side, the slip of the tape on the capstan or the like does not occur and, further, the magnetic tape having excellent characteristics in which the size or degree of cupping is small can be supplied in a constant manner.

Particularly, the pattern forming device of the guide roller is provided on the inner or outer circumferential surface of the guide roller without contacting the magnetic tape whereby the apertures or the like of the pattern forming device through which the laser beam passes are not clogged by the process wastes such as powder dust and the like as well as the processed magnetic tape can be supplied in a constant manner.

The magnetic tape processing apparatus according to the first aspect of the present invention is basically constructed as described above.

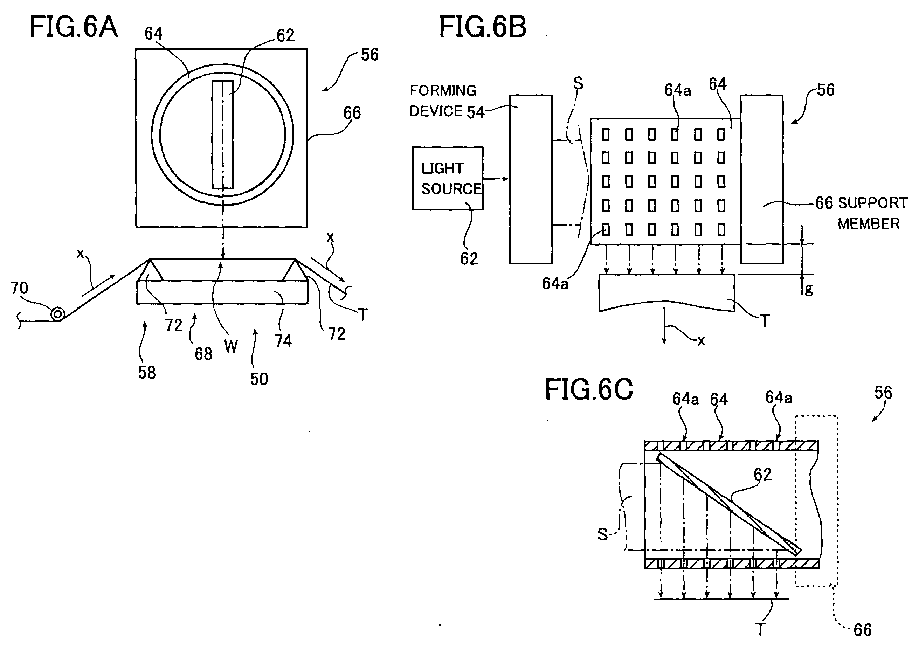

A magnetic tape processing apparatus according to the second aspect of the present invention will now be described with reference to FIGs. 6A to 7.

FIGs. 6A, 6B and 6C are each a diagrammatic conceptual view of an embodiment of a magnetic processing apparatus according to a second aspect of the present invention for producing magnetic tape having a recess on the above-described backing layer thereof. FIG. 6A shows the magnetic tape processing apparatus 50 viewed from a width direction of the tape T; FIG. 6B shows the processing apparatus 50 viewed from a lengthwise direction (transport direction) of the tape T; and FIG. 6C is a schematic cross-sectional view of a processing drum 56 of the processing apparatus 50.

The illustrated processing apparatus 50 is basically composed of a light source 52, a sheet-like laser beam forming device 54 (foregoing two devices are not shown in FIG. 6A), a processing drum 56 and a tape transport device 58.

The light source 52 emits a laser beam which comes to be laser light for processing a backing layer of the tape T. The light source 52 is not limited to any particular type, but it can use the similar type of the light source 12 which is used in the processing apparatus 10 in the first aspect according to the present invention as shown in FIG. 2.

The laser beam emitted from the light source 52 is subsequently incident on the sheet-like laser beam forming device (hereinafter referred to as "forming device") 54.

The forming device 54 expands (scatters) the diameter of the laser beam only in one direction and then shapes the resultant laser beam to parallel light thereby producing planar laser beam (hereinafter referred to as "sheet beam S"). The forming device 54 preferably produces the sheet beam S which forms a line in a radius direction of the processing drum 56. Further, in an illustrated embodiment, as a preferred embodiment, the sheet beam S and the tape T are disposed such that they are perpendicular to each other as planes.

The above-described forming device 54 is not particularly limited but various types of known optical systems (optical elements) which can convert the laser beam into the sheet beam S can be utilized. Specifically, an optical system which is a combination of the cylindrical lens and a collimator lens, another optical system which is a combination of a rod lens and the cylindrical lens (collimator lens) and the like are illustrated. The forming device 54 differs from the forming device 22 used in the processing apparatus 10 of the first embodiment according to the present invention in that expansion of the diameter of the laser beam by the beam expander 18 and making the intensity distribution thereof to be uniform by the shaping device 20 are not worked; thus, expanding the diameter thereof only in one direction and subsequently shaping it into parallel light are necessary.

The sheet beam S is then incident inside the processing drum 56 from an end face thereof, reflected by a mirror 62 disposed inside the processing drum 56, incident on the inner surface of the processing drum 56 and, as a result, forms a beam line in parallel with the axial line of the processing drum 56 on the inner surface thereof. Namely, in the processing apparatus 50 of the illustrated embodiment, the optical system according to the present invention is constructed by the light source 52, the forming device 54 and the mirror 62.

The mirror 62 is fixed relative to the rotation of the processing drum 56 (namely, drum body 64) to be described below by a known method such as holding it by a stay to be inserted from outside or the like. Further, the mirror 62 is preferably disposed at an angle of 45 degrees to the incidence of the sheet beam S; namely, it is preferable that the sheet beam S is reflected at an angle of 90 degrees by the mirror 62 and then is incident on the inner surface of the processing drum 56 perpendicularly thereto.

The processing drum 56 is basically composed of the drum body 64 in a hollow cylindrical form and a support member 66. For the purpose of clearly show the arrangement, in FIG 6C, the support member 66 is shown in dotted lines and other through holes 64a than those present in a cross-sectional portion are omitted.

The drum body 64 is a cylinder in which at least one end face on which the sheet beam S is incident is open. The support member 66 supports the drum body 64 by a known device such as supporting by a bearing or the like such that it is rotatable about the axial line thereof.

On a side surface of the drum body 64, a multiplicity of through holes 64a are formed such that dotted lines extending in a circumferential direction (transport direction of the tape T) are arranged in a plurality of rows in an axial direction (width direction of the tape T). Therefore, as shown in FIG. 6C, the sheet beam S that has been reflected by the mirror 62 and incident on the inner surface of the drum body 64 forms a beam line which is in parallel with an axial line on such an inner surface; moreover, a part thereof that has been incident in such through holes 64a is emitted to outside the drum body 64 and then incident on the processing position W (backing layer of the tape T positioned in the processing position W) as a plurality of laser beams.

A forming pattern of the above-described through holes 64a is not particularly limited and may appropriately be set in accordance with the tape T to be treated (processing pattern of the tape T).

The drum body 64 of such a processing drum 56 is rotated about the axial line by a member supported by the support member 66, for example, a rotating device (not shown for the purpose of simplicity of the figure), such as a roller contacting the outer circumference thereof, a belt winding around the outer circumference thereof or the like. As described above, the mirror 62 is fixed relative to the rotation of the processing drum 56 (drum body 64) so that only the drum body 64 is rotated.

It should be noted that various types of other known methods than the above-described method can be utilized as the rotating device of the drum body 64. For example, a rotation driving source of the drum body 64 may be provided to the support member 66 to rotate the drum body 64.

On the other hand, the tape T is transported in a lengthwise direction (in a predetermined direction while the transport direction x and the lengthwise direction are in agreement with each other) by a tape transport device 58 with the backing layer thereof facing to the processing drum 56 (a side surface of the drum body 56) as the transport position thereof is in registry with the processing position W. The transport direction of the tape T and the rotation direction of the above-described drum body 64 are in agreement with each other.

The tape transport device 58 is a known transport device (traveling device ) for the tape T which comprises a transport driving device (not shown) such as a capstan roller, a rewinder, a winder or the like, a position regulating device such as a roller having a collar or flange, a crown roller or the like for regulating the position of the tape T in the width direction, as well as a support member 68 for the regulating the position of the guide roller 70 or the tape T in the processing position W. In another case, the drum body 64 is provided with a rib or a flange and then the resultant drum body 64 may concurrently perform as the position regulating device for regulating the position of the tape T in the width direction.

The support member 68 comprises two blades 72 which are disposed on opposite sides from the processing position W in the transport direction and a fixing member 74 which fixedly supports the blades 72. The blades 72 are each in a form of a triangular prism which is provided, for example, such that a lateral edge thereof is in parallel with the width direction of the tape T and supports the tape T in a processing position W (mainly in the direction of an optical axis) by supporting the tape T upward from thereunder with the lateral ridge.

In the present invention, the processing position W is set in the optical path of the sheet beam S which is reflected by the mirror 62, forms a line in parallel with the axial line on the inner surface of the drum body 64 and then passes through the through holes 64a of the drum body 64. On this occasion, the rotation direction of the drum body 64 and the transport direction (lengthwise direction) of the tape T are in agreement with each other.

In other words, if the sheet beam S is not shaded by the drum body 64 of the processing drum 56, it forms a beam line extending in the width direction on the backing layer of the tape T which is transported in the lengthwise direction as it is in registry with the processing position W.

As described above, in the processing apparatus 50 of the illustrated embodiment, the sheet beam S emitted from the light source 52 and formed by the forming device 54 is incident inside the drum body 64 from an end face thereof, reflected by the mirror 62 and forms a beam line in parallel with the axial line on the inner surface of the drum body 64.

Since the drum body 64 is rotated about the axial line, laser beam which was incident in the through holes 64a of the drum body 64 as a part of the sheet beam S that has previously formed a line on the inner surface passes through the drum body 64 and becomes a plurality of laser beams which are then incident on the tape T in the processing position W to process the backing layer thereof. Namely, by the rotation of the drum body 64, incidence of the laser beam on the backing layer (namely, processing of the backing layer) is turned on and off.

Moreover, since the tape T is transported in the lengthwise direction by the tape transport device 58, as shown in FIGs. 1A and 1B, processing in a dotted line form composed of processed line segments a or processed dots b which are aligned in the width direction is performed in the lengthwise direction in succession.

On this occasion, in the processing apparatus 50 according to the present invention, the processing position W is set such that the tape T and the processing drum 56 (drum body 64) do not come into contact with each other.

In the processing apparatus 50 according to the present invention which processes the backing layer of the tape T by the laser beam, it is considered that processing of the backing layer is performed on the ground that both processing which are the processing by the heat of the laser beam and another processing by ablation (dissociation and isolation) caused by the laser beam are generated in a multiplex way. Accordingly, at the time of the processing, the process wastes (powder dust and the like) or a harmful gas may in some cases, be generated.

If the processing is performed on the backing layer while the drum body 64 contacts the tape T, various types of troubles occur such as that the process wastes adhere to the surface (outer surface) of the drum body 64 thereby clogging the through holes 64a, the process wastes which once adhered to one portion of the tape T adhere to another portion thereof thereby blemishing the tape T and the like.

Since the tape T and the drum body 64 do not contact with each other according to the processing apparatus 50 of the present invention to the contrary, the process wastes or the like are favorably prevented from adhering to the surface of the drum body 64 whereby the above-described clogging of the through holes 64a or the like is prevented.

Moreover, when the backing layer is processed as the tape T is transported while the drum body 64 is rotated, if the tape T contacts the drum body 64, wear of the drum body 64 proceeds in accordance with the processing of the tape T. However, according to the present invention in which they are not in contact with each other, wear of the drum body 64 is prevented whereby extension of the life span thereof can be worked.

In the present invention, since the processing of the tape T by the processing apparatus 50 according to the present invention is micro-processing, as described above, very high stability and precision of the transport of the tape T are required. If the tape T and the drum body 64 are in contact with each other, the transport speed or tension thereof is fluctuated by rotation resistance or friction of the drum body 64 so that transport stability or precision of the tape T is deteriorated. To contrast, according to the present invention in which they are not in contact with each other, the above-described problems are solved whereupon appropriate processing can be performed on the backing layer while the tape T is transported in a highly precise and consistent manner.

Therefore, according to the present invention, the backing layer of the magnetic tape is subjected to appropriate processing whereby the magnetic tape which has excellent characteristics such as no slip even at a high-speed transport, less cupping or the like can consistently be manufactured over a long period of time.

In the processing apparatus 50 according to the present invention, an interval between the processing drum 64 and the processing position W (tape T in the processing position W), as shown as the interval g in FIG. 6B, in not particularly limited; any interval is permissible as far as they are not in contact with each other. However, if the interval is too narrow, an effect of the present invention can not in some cases be fully performed; on the other hand, if the interval is too wide, a possibility exists that appropriate processing can not be performed depending on output of the light source 52 (intensity of laser beam).

Therefore, in the present invention, the interval g is preferably from 0.3mm to 15mm, more preferably, from 0.5mm to 10mm.

In the present invention in which the tape T and the drum body 64 are not in contact with each other, the transport speed of the tape T and the rotating speed (circumferential speed) of the drum body 64 may not always agree with each other; both speeds may appropriately be set in accordance with the processing pattern to be formed on the backing layer of the tape T.

Further, a processing pattern to be performed on the backing layer of the tape T may be changed or adjusted by adjusting (capable of adjusting during processing) any one of the rotating speed and the transport speed.

In any cases, the transport of the tape T and the rotation of the drum body 64 must be synchronized in order to perform appropriate processing in accordance with the intended processing pattern.

A method of synchronizing them is not particularly limited and various types of known methods are available. For example, when the driving source is separately set, a main feed roller (capstan) of the tape T and the rotation driving source of the drum body 64 may electrically be synchronized; when the same driving source is used, they may be synchronized by a reduction gear ratio or the like.

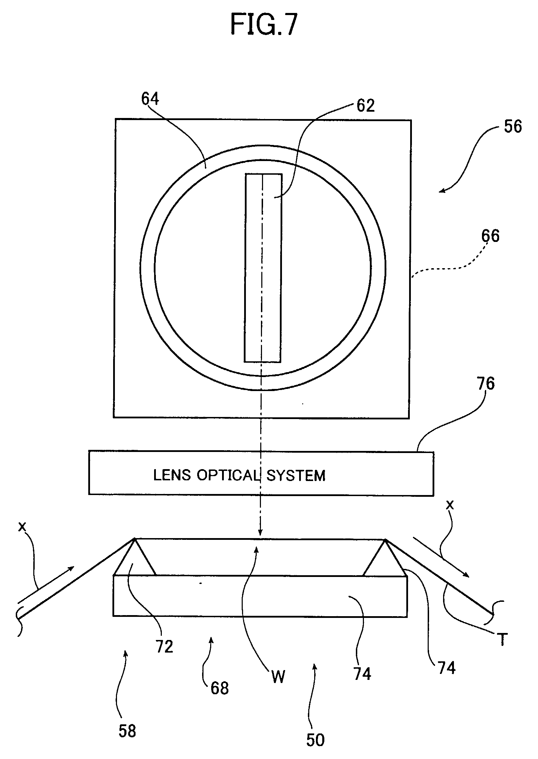

In another embodiment of the second aspect according to the present invention, as shown in FIG. 7, a lens optical system 76 is provided between the drum body 64 of the processing drum 56 and the processing position W (tape T in the processing position W) whereby the laser beam ejected from the through holes 64a of the drum body 64 is focused (condensed) to be incident on the processing position W (tape T).

According to the present embodiment, since the through holes 64a to be formed on the lateral surface of the drum body 64 can be made large by focusing the laser beam by means of the lens optical system 76, it is capable of easily performing processing on the drum body 64 and, thus, it is more advantageous from the point of cost of the apparatus, the device or the like. It should be noted that, also in the present embodiment, the above-described effects of the present invention such as prevention of blemishing of the drum body 64 or the tape T, prevention of wear of the drum body 64, consistent transport of the tape T or the like can favorably be realized.

In the present embodiment, the lens optical system 76 may be imaging optical system composed of one or a plurality of lenses which image the laser beam on the processing position W or may be a focusing optical system composed of one or a plurality of lenses which condense the laser beam on the processing position W.

Moreover, also in the embodiment in which the lens optical system 76 is present between the drum body 64 and the processing position W, an interval between the drum body 64 and the processing position W is not particularly limited, but may appropriately be set in accordance with the lens optical system 76.

Further, in the processing apparatus as illustrated in which the sheet beam S is reflected by the mirror 62 and then incident on the processing position W, a path length of the laser beam which is incident on the processing position W differs in the width direction of the tape T depending on an angle of the mirror 62.

On this occasion, power of the lens optical system 76 may be adjusted in the width direction to allow an appropriate processing to be performed or a lens optical system 76 may be provided individually for each of processed line segments a (processing in dotted line forms) which are to be formed in the width direction.

As described above, in the processing apparatus according to the present invention which processes the backing layer by the heat generated or ablation caused by the laser beam, the process wastes, gas or the like is generated by performing processing whereby various types of problems such as contamination of working place, blemish of the tape T and the like can occur.

To solve such problems, a cleaning device for a surface of the processing drum 56 (drum body 64), a cleaning device for the backing layer of the tape T which has been subjected to processing, a suction device for the gas or the like may be provided. The cleaning device may use any known method which has been used for the magnetic tape manufacturing apparatus or various types of processing apparatuses.

The magnetic tape processing apparatus according to the second aspect of the present invention has been described above in detail; however, the present invention is by no means limited to the above embodiments and various types of modifications are permissible.

For example, the illustration is an example in which the through holes 64a are formed on the lateral surface of the processing drum 56 (drum body 64) whereby passing and shading (turning on and off of processing) of the sheet beam S which has been incident on the inner surface are performed. However, the present invention is by no means limited to the above-described embodiment; various types of methods are available as a method of forming light transmissible portions and a light shading portion on the lateral surface of the processing drum.

To take an example, it is permissible that the drum body of the processing drum is formed by a light transmissible material such as optical glass or the like and then a pattern of light transmission and light shading (mask pattern) is formed on the lateral surface of the drum body by a known device and subsequently passing and shading of the sheet beam S which has been incident on the inner surface may be executed. Further, as a pattern forming method, exemplified are vapor deposition of metallic thin film, printing, film transfer or the like.

As described above in detail, according to the magnetic tape processing apparatus of the second aspect of the present invention, the slip does not occur on such as the capstan roller or the like even at a high-speed transport; therefore, the transport can be executed in a high-speed, accurate manner and also the magnetic tape having an excellent characteristic of reduced cupping can be effectively obtained. Moreover, according to the processing apparatus of the present invention, prevention of the blemish of the processing drum or tape to be caused by performing processing, prevention of wear of the processing drum, consistent traveling of the tape or the like is realized whereby the above-described magnetic tape can be manufactured in a consistent manner over a long period of time.

The magnetic tape processing apparatus according to the second aspect of the present invention is basically constructed as described above.

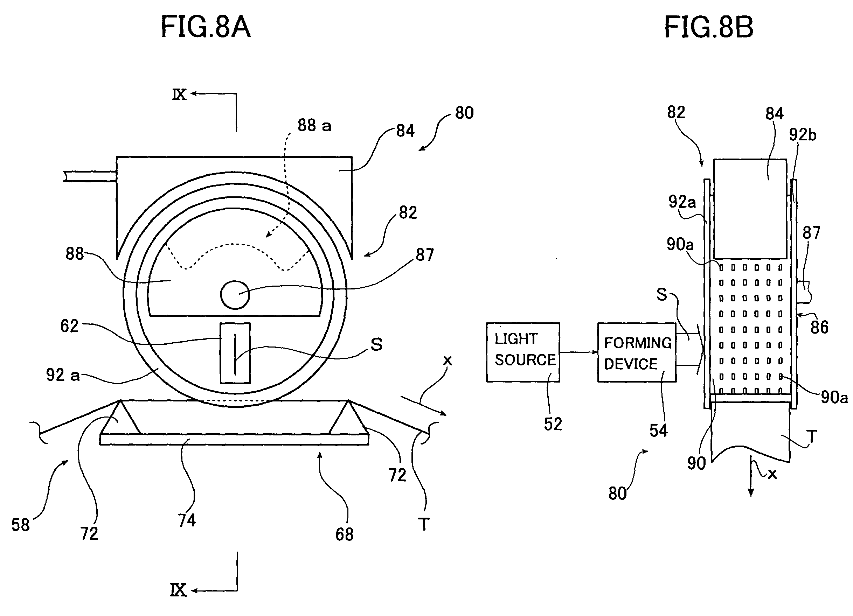

Subsequently, a magnetic tape processing apparatus according to a third aspect of the present invention will be described with reference to FIGs. 8A to 10.

FIGs. 8A and 8B are each a diagrammatic conceptual view of a magnetic tape processing apparatus of a third aspect of the present invention which manufactures a (magnetic) tape having a recess on a back layer as that described above. FIG. 8A is a view of the processing apparatus looked from a width direction of the tape; FIG. 8B is a view of the processing apparatus looked from a lengthwise direction (transport direction) of the tape.

The processing apparatus 80 of the third aspect according to the present invention shown in FIGs. 8A and 8B is substantially the same as the processing apparatus 50 of the second aspect according to the present invention shown in FIGs. 6A, 6B and 6C except that the processing apparatus 80 has a processing drum 82 and a suction chamber 84 in place of the processing drum 56; hence, identical components are designated by like numerals and will not described in detail.

The illustrated processing apparatus 80 is basically composed of a light source 52, a sheet-like laser beam forming device 54 (both are not shown in FIG. 8A), the processing drum 82, a tape transport device 58 and the suction chamber 84.

As described below, a mirror 62 is disposed in the processing drum 82. In the illustrated processing apparatus 80, an optical system of the present embodiment is constructed by the light source 52, the forming device 54 and the mirror 62.

A laser beam emitted from the light source 52 is incident on the forming device 54 to form a sheet beam S. The sheet beam S thus formed by the forming device 54 is then incident inside the processing drum 82 from an end face of the processing drum 82, reflected by the mirror 62 disposed inside the processing drum 82, incident on an inner surface of the processing drum 82 and forms a beam line (plane) in parallel with an axial line of the processing drum 82 on the inner surface thereof.

The mirror 62 is fixed relative to rotation of the processing drum 82 to be described below by a known method such as being fixed to a central shaft 87 of the processing drum 82 or an exterior stay or the like. Further, the mirror 62 is preferably disposed with an angle of 45 degrees to incidence of the sheet beam S; namely, the sheet beam S is preferably reflected at a reflection angle of 90 degrees by the mirror 62 to be incident on the inner surface of the processing drum 82 perpendicularly thereto.

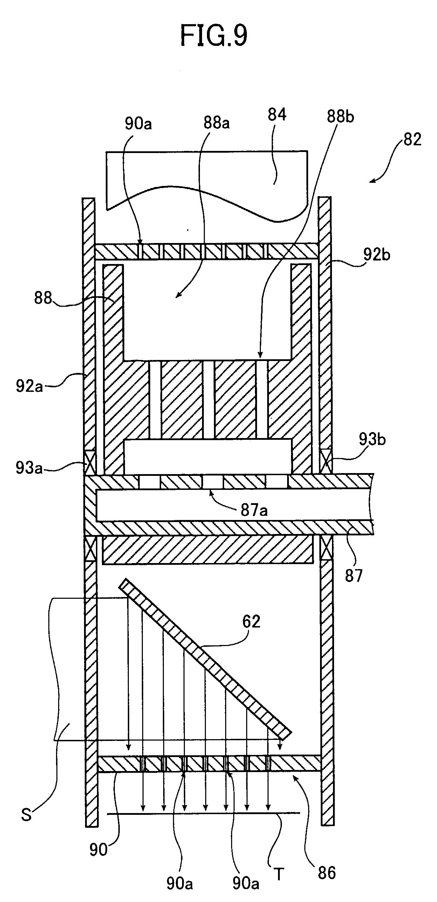

FIG. 9 is a schematic cross-sectional view (looked in the direction of arrows after taken on line IX-IX of FIG. 8A) of the processing drum 82.

The processing drum 82 is basically composed of a drum body 86 in a hollow cylinder form, a central shaft 87 rotatably supporting the drum body 86 about an axial line thereof and a block 88 disposed inside the drum body 86.

As described above, the mirror 62 is fixed inside the drum body 86 of the processing drum 82.

The drum body 86 is a cylinder 90 both end faces of which are closed with disks 92 (92a and 92b).

On a lateral surface of the cylinder 90, a multiplicity of through holes 90a are formed such that dotted lines extending in a circumferential direction (transport direction of the tape T) are formed in a plurality of rows in an axial line direction (see FIGs. 1A and 1B). Therefore, as shown in FIG. 9, the sheet beam S which is reflected and then incident on an inner surface of the drum body 86 (cylinder 90) forms a beam line (plane) in parallel with the axial line on the above-described inner surface whereupon a portion thereof incident on the through holes 90 is emitted to outside the drum body 86 as a laser beam.

A processing pattern of the tape T may be adjusted by a forming pattern of the through holes 90a.

Each of the disks 92 which close the end faces of the cylinder has an aperture in the center thereof. In the processing drum 82 of the illustrated embodiment, the drum body 86 is rotatably supported about the axial line by rotatably supporting the disks 92 by the central shaft 87.

The disk 92a which is an end face for incidence of the sheet beam S is formed of a material which is light transmissible, preferably, excellent in optical characteristics such as quartz glass or the like.

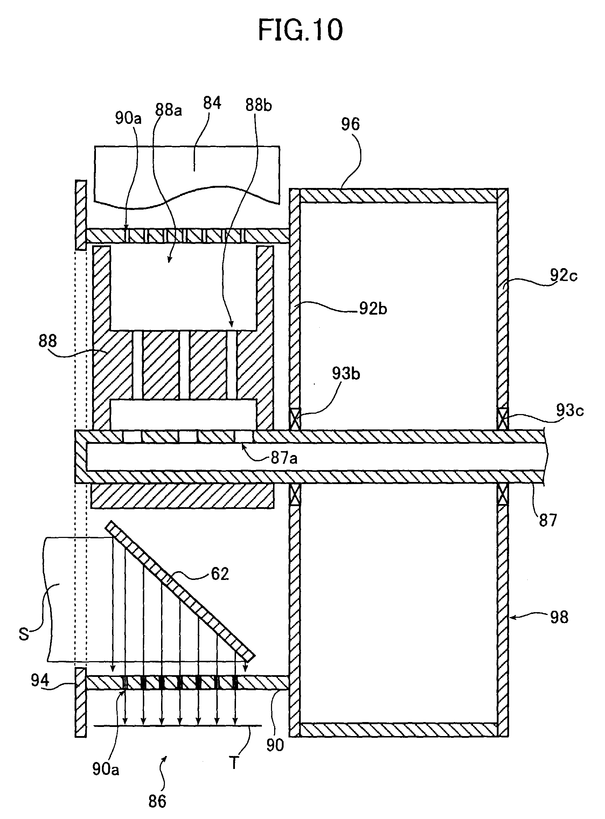

In another case, the disk to be used as the incidence end face may be in an annular form by taking an arrangement shown in FIG. 10.

In the illustrated embodiment shown in FIG. 10, a disk 94 in an annular form in which an area on which the sheet beam S is incident opens is used in place of the light-transmissible disk 92a. In the above-described embodiment, a drum 98 is constructed such that the disk 92c which is supported rotatably about the central shaft 87 by a bearing 93c is disposed in the opposite side of the disk 94 from the disk 92b and both end faces of a cylinder 96 are closed by disks 92b and 92c. Namely, the above-described arrangement is composed such that the drum 98 which is rotatably supported about the axis line by the central shaft 87 and then the drum body 86 is rotatably supported about the axis line by holding the drum body 86 by means of the thus arranged drum 98.

The central shaft (fixed axis) 87 which rotatably supports the rotating drum body 86 is a rigid pipe in which an end thereof is closed and a plurality (three in FIG. 10) of through holes 87a are formed through a lateral surface of an area thereof existing inside the drum body 86.

Moreover, the other end of the central shaft 87 is connected with an air introducing device (differential pressure generating device) such as a compressor, a blower or the like. Namely, air is introduced via the central shaft 87 into the inside of the drum body 86 so that it comes to be in a pressurized state compared with the outside thereof. As described above, since a multiplicity of through holes 90a are formed in the cylinder 90 of the drum body 86, the air inside the drum body 86 in a pressurized state is ejected into outside through the through holes 90a.

Pressure difference between the inside and the outside of the drum body 86 (pressure difference between a space to be formed by a recess 88a of a block 88 and the outside, if it has the block 88 to be described below) is not particularly limited, but the pressure difference which can remove process wastes or the like that adhere to the through holes 90a of the processing drum 82 may appropriately be determined .

In the processing apparatus 80 of the illustrated embodiment, as a preferred aspect, the block 88 is fixed to the central shaft 87.

The block 88 is a member in a half-cylinder form having a curved surface in an opposite side of a direction in which the sheet beam S is reflected by the mirror 62 (namely, opposite side of the tape T) and has a recess 88a in the side of the curved surface; the recess 88a and the inner surface of the drum body 86 forms a space.

The block 88 does not contact the drum body 86 and is constructed such that it does not interfere with the rotation of the drum body 86; preferably, the block 88 is constructed such that the space which is formed by the inner surface of the drum body 86 and the recess 88a inside the drum body 86 is substantially sealed.

The space which is formed by the above-described recess 88a and the through holes 87a of the central shaft 87 communicate with each other via communicating holes 88b. Therefore, in the illustrated embodiment, the space formed by the recess 88a is particularly pressurized by the air supplied from the central shaft 87 so that the air inside the drum body 86 is ejected outside mainly via the above-described space, namely, through the through holes 90a which are positioned in the opposite side of the tape T

Moreover, in the illustrated embodiment, as a preferred aspect, a suction chamber 84 having an aperture facing to the block 88 (particularly, the space formed by the recess 88a) inside the processing drum 82 is disposed.

The suction chamber 84 is a known suction chamber the inside (a space constructed by the chamber) of which is depressurized by a blower or a suction pump to intake air from outside through the apertures. Therefore, the air ejected from the through holes 90a which are positioned in the space formed by the upper recess 88a is sucked by the suction chamber; hence no scattering thereof occurs.

It is should be noted that, in the present invention, the block 88 and the suction chamber 84 are provided as a preferred embodiment, but any one or both of them may not be provided thereto; however, when an influence given to the transport of the tape T or the like by the air ejected (or sucked) through the through holes 90a is taken into consideration, at least one of them, particularly, the block 88, is preferably provided thereto.

The drum body 86 of such a processing drum 82 is rotated about the central shaft 87 as a rotation axis by a rotation device (not shown for the purpose of simplicity of FIGs. 9 and 10) such as a roller contacting an outer circumference of the disk 92b, a belt wrapped around the outer circumference of the disk 92b and the like.

On this occasion, the drum body 86 is supported by the central shaft 87 via a bearing 93; The block 88 is fixed to the central shaft 87; the mirror 62 is fixed relative to the rotation of the processing drum 82 by a known device; hence, it is only the drum body 86 that rotates in the processing drum 82.

Further, if the tape T contacts or wraps around the processing drum 82 (the cylinder 90 of the drum body 86), the transport of the tape may be used as the rotation device.

On the other hand, the tape T is transported in a lengthwise direction (transported in a predetermined direction with the transport direction x being in agreement with the lengthwise direction) by the tape transport device 58 as it is in registry with the processing position W with the backing layer thereof facing to the processing drum 82 (a lateral surface of the drum body 86). Further, the transport direction of the tape T agrees with the rotation direction of the above-described drum body 86.

The tape transport device 58 has the position regulating device for the tape T in the width direction (not shown), the guide roller or the like as described above; however, in the present embodiment, the disks 92a and 92b of the drum body 86 may also concurrently function as the position regulating device for the tape T in the width direction.

On this occasion, the processing position W is set on the light path of the sheet beam S which is reflected by the mirror 62, forms a line in parallel with the axial line on the inner surface of the drum body 86 (cylinder 90) and then passes through the through holes 90a of the drum body 86. Further, the rotation direction of the drum body 86 agrees with the transport direction (lengthwise direction) of the tape T.

In other words, if the sheet beam S is not shaded by the cylinder 90 of the processing drum 82, it forms a beam line extending in the width direction on the backing layer of the tape T which is transported by the tape transport device 58 in the lengthwise direction as it is in registry with the processing position W.

As described above, in the processing apparatus 80 of the illustrated embodiment, the sheet beam S which is emitted from the light source 52 and then formed by the forming device 54 is incident inside the drum body 86 from the light transmissible disk 92a, reflected by the mirror 62 and forms a line in parallel with the axial line on the inner surface of the drum body 86 (cylinder 90).

On this occasion, since the drum body 86 is rotated about the axial line by the central shaft 87, a portion of the sheet beam S which formed a line on the inner surface is incident in the through holes 90a of the cylinder 90 to become a laser beam; the resultant laser beam then passes through the cylinder 90, is incident on the tape T in the processing position W and performs processing on the backing layer thereof. Namely, by the rotation of the drum body 86, incidence of the laser beam to the backing layer (processing of the backing layer) is turned on and off.

Further, since the tape T is being transported in the lengthwise direction x by the tape transport device 58, the backing layer of the tape T, as shown in FIGs. 1A and 1B, is subjected to processing in a dotted line form composed of processed line segments a or processed dots b in the lengthwise direction in succession.

On this occasion, in the processing apparatus according to the present invention which performs processing on the backing layer by the laser beam, it is considered that both of the heat processing by the laser beam and the processing by the ablation (dissociation or isolation) caused by the laser beam are generated in a complex manner thereby performing processing on the backing layer. Hence, the processing of the backing layer can in some case generate process wastes (powder dust and the like), a harmful gas or the like.

Many of the thus generated process wastes adhere to the outer surface of the drum body 86 (cylinder 90) which is closest to the tape T and may clog the through holes 90a through which the sheet beam S for performing processing on the backing layer of the tape T passes.

On the other hand, the processing apparatus of the present embodiment, as described above, introduces air from the central shaft 87, pressurizes the inside of the processing drum 82 to create a pressure difference between the outside thereof and then ejects the air from the through holes 90a. Particularly, in the processing apparatus 80 of the illustrated embodiment, as a preferred aspect, the block 88 is provided to increase the pressure only in the area in the opposite side of the tape T and, moreover, the suction chamber 84 sucks the area which faces to the block 88.

Therefore, even if the process wastes adhere to the through holes 90a, they are blown off by the air ejected from inside so that the through holes 90a are not clogged. Further, according to the illustrated embodiment, since such an ejection of the air is mainly performed in an area in which the tape is not present under the condition that the block 88 is in operation, no detrimental effect is given to the tape transport or the like. Moreover, since the suction chamber 84 sucks the air as well as the process wastes ejected from the drum body 86, the process wastes or the like are not scattered around.

As described above, in the processing apparatus according to the present embodiment, it is permissible that the tape T and the drum body 86 may either be in contact with each other or not be in contact with each other.

On this occasion, as shown in the illustrated embodiment, if the tape T and the drum body 86 are not in contact with each other, the transport speed of the tape T and the rotation speed (circumferential speed) of the drum body 86 are not necessarily required to be in agreement with each other. In another case, if they are not in contact with each other, by adjusting (possible under processing) the rotation speed of the drum body 86 or the transport speed of the tape T, the processing pattern of the backing layer of the tape T may be changed or adjusted.

It is preferable that, if the tape T and the drum body 86 are in contact with each other, both of the above-described speeds are in agreement with each other in order to prevent a possible damage of the tape T. On this occasion, the drum body 86 may concurrently function as a holding device for holding the tape T in a processing position.

In the example described above, air is introduced into the inside of the drum body 86 of the processing drum 82 to increase the pressure thereof and then to eject the air into the outside thereof; however, the present invention is not limited to the above-described embodiment.

To take an example, it is permissible that the central shaft 87 is connected to a discharge device (differential pressure generating device) such as the suction pump, the blower for suction or the like for depressurizing the inside of the drum body 86 relative to the outside thereof thereby sucking the air from the outside or further it is provided with a blowing device in place of the suction chamber 84 whereupon the air is blown to outside the drum body 86 to suck the process wastes which are generated by performing processing and then adhere to the through holes 90a into inside the drum body 86.

Differential pressure between the inside and the outside of the processing drum may appropriately be established such that the pressure difference is enough to remove the process wastes adhering to the through holes 90a of the processing drum 82 in the same way as in the above-described embodiment.

In the processing apparatus of the present embodiment, a cleaning device such as an adhesive tape may further be provided to remove the process wastes adhering to the outer surface of the drum body 86. Further, in order to prevent contamination of the working place by the process wastes or a harmful gas, or a damage or a blemish of the front/back surface of the tape, the cleaning device (or the like) such as the adhesive tape or the like for cleaning the surface of the tape T, a duct to suck gases or the like may be provided downstream (in the transport direction of the tape T) of the processing position W.

The magnetic tape processing apparatus of the third aspect of the present invention has been described above in detail, the present invention is not limited to the above embodiments, but various types of modifications are permissible.

For example, in the illustrated embodiment, the pressure difference between the, inside and the outside of the processing drum 82 is generated by introducing or sucking the air from the central shaft 87; however, the present invention is not limited to the above embodiment. To take an example, the pressure difference between the inside and the outside of the processing drum 82 may be generated by sucking (blowing) the air from the suction chamber 84.

As described above in detail, according to the magnetic tape processing apparatus of the third aspect of the present invention, there can be effectively obtained the magnetic tape having excellent characteristics which does not slip on a capstan roller and the like even if its transportation speed is increased and thus can be precisely transported at a high speed and moreover hardly causes cupping.

Further, by the processing apparatus according to the present invention, the process wastes generated by processing the backing layer can be prevented from adhering to the through holes through which the laser beam which processes the backing layer passes whereupon processing on the backing layer of the magnetic tape can be performed in an appropriate, consistent manner over a long period of time.

The magnetic tape processing apparatus according to the third embodiment of the present invention is basically constructed as described above.

As described above, processing of the tape T by the magnetic tape processing apparatus of each of the first to third aspects may be performed at any step of the magnetic tape production steps as far as it is executed after the backing layer is formed; for example, it may be performed either before or after the tape is cut into a product width by a slitter.

By using such a magnetic tape manufactured by the magnetic tape processing apparatus according to each of the first to third embodiments of the present invention, the tape transport in a magnetic tape manufacturing apparatus such as a blade machine or the like can be executed in a high-speed, precise manner and, as a result, the magnetic tape having no damage can be manufactured in a consistent, highly efficient manner under an appropriately controlled production management; further, when the magnetic tape is wound and made to a cartridge and a pancake, the wound appearance thereof can be made beautiful; moreover, the deteriorated outside appearance of the magnetic tape, the deteriorated abutment of the tape against a head, the damage of the edges of the tape, and the like due to the cupping can also be prevented

While the magnetic tape processing apparatus according to the present invention has been described above in detail by its various types of embodiments of the above-described respective aspects, it should be noted that the invention is by no means limited to the foregoing embodiments and various improvements and modifications may of course be made without departing from the scope and spirit of the invention.

## Claims

1. A magnetic tape processing apparatus, comprising:
an optical system for allowing at least one laser beam to be incident on a predetermined processing position;
a transport device for transporting a magnetic tape in a lengthwise direction as it is held in a state in which a backing layer thereof faces to an upstream side of an optical path of said laser beam in said predetermined processing position; and
a guide roller in a hollow cylindrical form on a lateral surface of which light transmitting portions and a light shading portion for forming laser beams of a first predetermined pattern in said predetermined processing position are formed and which has a rotating axial line in a direction orthogonal to a transport direction of the magnetic tape and can freely rotates in accordance with a transport speed of the magnetic tape,
wherein the laser beam which has been incident inside said guide roller from said optical system is allowed to pass through said light transmitting portions toward outside of said guide roller in a radial direction thereof, and
wherein the magnetic tape is subjected to processing in said predetermined processing position by the laser beams which has thus passed through said light transmitting portions and formed said first predetermined pattern.

2. The magnetic tape processing apparatus according to claim 1,
wherein said guide roller comprises:
a cylindrical tubular member which is light transmissible and freely rotatable in accordance with the transport speed of the magnetic tape; and
a pattern forming device which disposes said light transmitting portions for allowing a part of said laser beam to pass therethrough and said light shading portion for shading the other part of said laser beam than said part of the laser beam which passes through said light transmissible portions in a second predetermined pattern,
wherein the laser beam which has been incident inside the cylindrical tubular member of said guide roller from said optical system is allowed to pass through said pattern forming device toward the outside of said guide roller, and
wherein the magnetic tape is subjected to processing in said predetermined processing position by the laser beams which has formed said first predetermined pattern by thus passing through said pattern forming device.

3. The magnetic tape processing apparatus according to claim 2, wherein said cylindrical tubular member is made of light transmissible material.

4. The magnetic tape processing apparatus according to claim 2 or 3, wherein said pattern forming device is provided on an inner or outer circumferential surface of said guide roller.

5. The magnetic tape processing apparatus according to any one of claims 2 to 4, wherein said pattern forming device comprises at least one member selected from the group consisting of a metallic cylinder having apertures formed in accordance with a processing pattern to which the magnetic tape is subjected, a metallic thin film having apertures formed in accordance with the processing pattern to which the magnetic tape is subjected, a light-shading film produced by first forming the second predetermined pattern in accordance with the processing pattern to which the magnetic tape is subjected and then by utilizing a technique of film transfer and a surface subjected to surface roughening processing formed on the inner circumferential surface of said guide roller for allowing the laser beam to be scattered in a non-processed portion of the processing pattern of the magnetic tape.

6. The magnetic tape processing apparatus according to any one of claims 2 to 5, wherein, when said pattern forming device is provided on the outer circumferential surface of said guide roller, the outer circumferential surface of said guide roller is coated with a light-transmissible material.

7. The magnetic tape processing apparatus according to any one of claims 1 to 6, wherein said guide roller is wrapped by the magnetic tape, and wherein the outer circumferential surface of said guide roller is in contact with the backing layer of the magnetic tape.

8. The magnetic tape processing apparatus according to any one of claims 1 to 6, wherein said guide roller is not in contact with the backing layer of the magnetic tape, and wherein the outer circumferential surface of said guide roller is adjacent to the magnetic tape and faces to the backing layer of the magnetic tape.

9. The magnetic tape processing apparatus according to any one of claims 1 to 8, further comprising a cleaning device for removing a blemish on the outer circumferential surface of said guide roller.

10. The magnetic tape processing apparatus according to any one of claims 1 to 9, wherein said optical system comprises a light source for emitting said at least one laser light, a sheet-like laser beam forming device for changing the laser beam emitted from said light source into a sheet-like laser beam extending only in a one dimensional direction and a mirror for reflecting said sheet-like laser beam which has been incident inside said guide roller toward outside of said guide roller.

11. The magnetic tape processing apparatus according to any one of claims 1 to 10, wherein said optical system comprises the light source for emitting at least one of a laser beam in an ultraviolet region and a laser beam in a visible region as said at least one laser beam.

12. A magnetic tape processing apparatus, comprising:
a freely rotatable hollow cylindrical drum on a lateral surface of which light transmitting portions and a light-shading portion for forming a predetermined pattern are formed;
a rotating device for rotating said drum about an axis line;
an optical system for forming a beam line by a laser beam by allowing said laser beam in a planar form to be incident on an inner surface of said drum; and
a transport device for transporting a magnetic tape with a backing layer thereof facing to said drum in a lengthwise direction in parallel with a direction of rotation of said drum, as the magnetic tape is in registry with a processing position to be set in a position which is on an optical path of the laser beam that has been incident on the inner surface of said drum and then passed through the light transmitting portions and in which the magnetic tape is not in contact with said drum.

13. The magnetic tape processing apparatus according to claim 12, further comprising a lens optical system between said processing position and the drum.

14. A magnetic tape processing apparatus, comprising:
a freely rotatable hollow cylindrical drum which has a multiplicity of through holes on a lateral surface thereof;
a rotating device for rotating said drum about an axis line;
an optical system for forming a beam line by a laser beam by allowing said laser beam in a planar form to be incident on an inner surface of said drum; and
a transport device for transporting a magnetic tape with a backing layer thereof facing to said drum in a lengthwise direction in parallel with a direction of rotation of said drum, as the magnetic tape is in registry with a processing position to be set on an optical path of the laser beam that has been incident on said inner surface and then passed through said through holes; and
a differential pressure generating device for generating pressure difference between inside and outside said drum.
